# EUROPEAN PATENT SPECIFICATION

(11) **EP 3 756 910 B1**
(45) Date of publication and mention of the grant of the patent: **19.07.2023**
(21) Application number: 18906896.8
(22) Date of filing: 22.02.2018
(51) Int. Cl.: B60C 25/12, B60C 25/05

(54) **TIRE ASSEMBLY FITTING DEVICE AND TIRE ASSEMBLY MANUFACTURING METHOD**
VORRICHTUNG ZUM ANBRINGEN EINER REIFENANORDNUNG UND VERFAHREN ZUR HERSTELLUNG EINER REIFENANORDNUNG
DISPOSITIF D'AJUSTEMENT DE PNEUMATIQUE ET PROCÉDÉ DE FABRICATION D'UN ENSEMBLE PNEUMATIQUE

(43) Date of publication of application: 30.12.2020
(73) Proprietor: CENTRAL MOTOR WHEEL CO., LTD., Anjo-shi, Aichi 446-0004 (JP)
(72) Inventor: FUNATO, Junji, Anjo-shi, Aichi 446-0004 (JP)
(74) Representative: Winter, Brandl - Partnerschaft mbB
(86) International application number: PCT/JP2018/006414
(87) International publication number: WO 2019/163048

(56) References cited:
- CN-A- 107 175 997
- DE-A1- 2 104 957
- JP-A- 2006 056 315
- US-A- 2 845 969

## Description

### TECHNICAL FIELD

A technique disclosed in this specification relates to a fitting device for a tire assembly.

### BACKGROUND ART

For a tire assembly including a wheel and a tire mounted on the wheel, an improvement in the fit of the tire to the wheel is required. The improvement in the fit means approaching a state in which the positions of bead portions of the tire relative to bead seat portions of the wheel in the wheel axis direction are approximately uniform over the entire circumference of the tire assembly. When the fit of the tire assembly is poor, there is a possibility, for example, that force variation of the tire assembly (RFV (radial force variation; force that varies in the radial direction in variation of force that is generated in a contact area with the road surface when the tire is rotated) or LFV (lateral force variation; force that varies in the lateral direction in variation of force that is generated in a contact area with the road surface when the tire is rotated)) degrades, or that the mass distribution of the tire assembly in the circumferential direction cannot be accurately measured, resulting in that it is not possible to accurately perform balance correction of the tire assembly thereafter.

Conventionally, a fitting device for improving the fit of a tire assembly is known. For example, there is known a fitting device that alternately repeats, immediately after the air is filled in a tire assembly, a process of releasing contact between bead portions of a tire and a wheel by pressing sidewalls of the tire and a process of restoring the contact between the bead portions of the tire and the wheel by stopping the pressing (see Patent Document 1). Further, there is known a fitting device that, while holding a wheel of a tire assembly before the air is filled in the tire assembly, supports a bead portion of a tire so as to be descendible relative to the wheel, thus enabling the movement of the bead portion by a horizontal force that is generated due to the descent of the bead portion (see Patent Document 2). On the other hand, there are known tire mounting devices, which are configured to mount a tire on a wheel (see Patent Documents 3, 4 and 5).

### PRIOR ART DOCUMENT

### PATENT DOCUMENT

Patent Document 1: Japanese Unexamined Patent Application Publication No. 2003-11629
Patent Document 2: Japanese Unexamined Patent Application Publication No. 2007-153112
Patent Document 3: DE 21 04 957 A1
Patent Document 4: US 2 845 969 A1
Patent Document 5: CN 107 175 997 A

Above mentioned documents 3-5 all disclose tire mounting devices for mounting a tire onto the wheel portion by pressing a bead portion and a sidewall portion into the well of such a wheel. However these documents do not fit the bead portions of the tire onto the bead seats on the rim.

### SUMMARY OF THE INVENTION

### PROBLEM TO BE SOLVED BY THE INVENTION

However, with the conventional fitting devices described above, there are cases where the fit of a tire assembly cannot be sufficiently improved, and there is still room for further improvement.

This specification discloses a technique that can solve at least a part of the problem described above. This object is solved by the subject matter of the independent claims 1 and 7. Further aspects are disclosed in the subclaims.

### MEANS FOR SOLVING THE PROBLEM

The technique disclosed in this specification can be realized as the following modes.
(1) A fitting device for a tire assembly disclosed in this specification is a fitting device configured to fit a bead portion of a tire of a tire assembly, including a wheel and the tire mounted on the wheel, wherein the tire includes a pair of sidewalls, a pair of bead portions and a tread surface, to a bead seat portion of the wheel. The fitting device includes a support portion configured to support the tire assembly, and a pressing portion. The pressing portion is configured to press a first surface portion in a surface of at least one of sidewalls of the tire, and the support portion is configured to support the tire assembly so that a second surface portion located in the surface of the at least one sidewall on an opposite side of a rotation axis of the tire assembly from the first surface portion is displaceable in a direction away from a rim center plane of the wheel, wherein the rim center plane is a virtual plane that passes through the center of the wheel in its rotation axis direction and is perpendicular to the rotation axis of the wheel. The first surface portion is a portion in a convex region being a half-arc-shaped region in which a convex portion is located at the approximate center in the circumferential direction in a pair of half-arc-shaped regions formed by dividing the annular surface of an upper sidewall and lower sidewall by a virtual straight line perpendicular to the rotation axis of the tire assembly and passing through the rotation axis of the tire assembly. The second surface portion is a portion in a concave region being a half-arc-shaped region in which a concave portion is located at the approximate center in the circumferential direction in a pair of half-arc-shaped regions formed by dividing the annular surface of the upper sidewall and lower sidewall by a virtual straight line perpendicular to the rotation axis of the tire assembly and passing through the rotation axis of the tire assembly. The convex portion is, in each of the surfaces of the upper sidewall and lower sidewall, a surface portion where a distance from a rim center plane of the wheel is the longest, and the concave portion is, in each of the surfaces of the upper sidewall and lower sidewall, a surface portion where the distance from the rim center plane of the wheel is the shortest. The convex portion and the concave portion are located on opposite sides with respect to the rotation axis of the tire assembly.
   In the tire assembly, there are cases where since the positions of the bead portion of the tire relative to the bead seat portion of the wheel in the wheel axis direction are not uniform over the entire circumference of the tire assembly, i.e. the fit between the bead seat portion of the wheel and the bead portion of the tire is low, a concave portion and a convex portion are present in the surface of the sidewall of the tire. In general, the concave portion and the convex portion are located on the generally opposite sides to the rotation axis of the tire assembly from each other. The inventor of this application has discovered for such a tire assembly with the low fit that the fit of the tire assembly is improved by pressing the surface on the convex portion side of the sidewall while allowing the concave portion side of the sidewall to be displaceable in the direction away from the rim center plane of the wheel (the direction in which the tire is inflated). Specifically, by a pressing force to the surface on the convex portion side of the sidewall and a restoring force of the tire, for example, the distal end of the bead portion of the tire, on the convex portion side, moves on the bead seat portion of the wheel toward the rim center plane side from the position on the flange side of the wheel. Following this, it is expected that, on the concave portion side, the distal end of the bead portion of the tire moves on the bead seat portion of the wheel toward the side opposite to the rim center plane from the position on the drop portion side of the wheel. Thus, in this fitting device for the tire assembly, the pressing portion is configured to press the first surface portion in the surface of at least one of the sidewalls of the tire. Further, the support portion is configured to support the tire assembly so that the second surface portion located in the surface of the sidewall on the opposite side of the rotation axis of the tire assembly from the first surface portion is displaceable in the direction away from the rim center plane. Therefore, while supporting the tire assembly by the support portion in the state where the concave portion side (the second surface portion) of the sidewall of the tire is displaceable in the direction in which the tire is inflated, it is possible to press the convex portion side (the first surface portion) of the sidewall of the tire by the pressing portion. Consequently, according to this fitting device, it is possible to improve the fit between the wheel and the tire.
(2) The above-described fitting device for the tire assembly may be a configuration further including an application portion configured to apply, to the tread surface (316) of the tire, a force in a direction in which the first surface portion of the sidewall is displaced toward the wheel side. With this fitting device, compared to a configuration in which the force by the application portion is not applied to the tire, the bead portion of the tire easily moves on the bead seat portion of the wheel on the first surface portion side of the sidewall of the tire, and therefore, it is possible to improve the fit between the wheel and the tire more reliably.
(3) In the above-described fitting device for the tire assembly, the application portion may include two or more application members configured to respectively apply forces to portions in a tread surface of the tire, the portions being spaced apart from each other in a circumferential direction of the tire. With this fitting device for the tire assembly, compared to a configuration in which the force is applied to only one portion in the tread surface of the tire, the bead portion of the tire easily moves on the bead seat portion of the wheel more smoothly on the first surface portion side of the sidewall of the tire, and therefore, it is possible to further improve the fit between the wheel and the tire.
(4) The above-described fitting device for the tire assembly may be a configuration further including a timing control part configured to: cause the force by the application portion to be applied to the tire; and in a state in which the force by the application portion is applied to the tire, cause the pressing portion to start pressing the first surface portion of the tire. With this fitting device for the tire assembly, by applying the force by the application portion to the tire in advance, the displacement of the wheel is suppressed by the force by the application portion and the supporting force by the support portion, and therefore, it is possible to suppress that the fit between the wheel and the tire is lowered due to the displacement of the wheel.
(5) The above-described fitting device for the tire assembly may be a configuration further including a detection part configured to detect a concave-convex state in the surface of the sidewall of the tire of the tire assembly supported by the support portion, wherein the concave-convex state is a state of the tire assembly before fitting of the bead portion of the tire to the bead seat portion of the wheel, where the tire is slightly deformed from the original shape so that a convex portion and a concave portion are present in each of the surfaces of the upper sidewall and the lower sidewall, and an adjustment part configured to, based on a detection result of the detection part, adjust relative positions between the tire assembly and the pressing portion so that the pressing portion is able to press a surface portion on a convex portion side in the surface of the sidewall. With this fitting device, it is possible to automatically adjust the relative positions between the tire assembly and the pressing portion based on the detection result of the detection part so that the pressing portion is able to press the surface portion on the convex portion side of the sidewall.
(6) In the above-described fitting device for the tire assembly, the surface portion on the convex portion side may be a surface portion located in the surface of the sidewall between the convex portion and a portion moved by 90 degrees from the convex portion in the circumferential direction of the tire. The inventor of this application has discovered that the fit between the wheel and the tire is improved more smoothly by pressing the surface portion located between the convex portion and the portion moved by 90 degrees from the convex portion than by pressing the convex portion itself of the sidewall. Therefore, with this fitting device, it is possible to improve the fit between the wheel and the tire more smoothly compared to the configuration of pressing the convex portion itself of the sidewall.
(7) A tire assembly manufacturing method disclosed in this specification includes an assembly step of forming a tire assembly by mounting a tire having a bead portion on a wheel having a bead seat portion; and after the assembly step fitting a bead portion of the tire to a bead seat portion of the wheel using an fitting device according to any one of modes 1 to 6, and including a pressing step of, while pressing a first surface portion located in a surface of at least one of sidewalls of the tire on a side of a convex portion where a distance from a rim center plane of the wheel is the longest, allowing a second surface portion to be displaceable in a direction away from the rim center plane, the second surface portion located in the surface of the sidewall on a side of a concave portion where the distance from the rim center plane is the shortest, wherein before fitting of the bead portion of the tire to the bead seat portion of the wheel, the tire assembly is in a concave-convex state, where the tire is slightly deformed from the original shape so that a convex portion and a concave portion are present in each of the surfaces of a upper sidewall and a lower sidewall, wherein the rim center plane is a virtual plane that passes through the center of the wheel in its rotation axis direction and is perpendicular to the rotation axis of the wheel, wherein the first surface portion is a portion in a convex region being a half-arc-shaped region in which a convex portion is located at the approximate center in the circumferential direction in a pair of half-arc-shaped regions formed by dividing the annular surface of the upper sidewall and lower sidewall by a virtual straight line perpendicular to the rotation axis of the tire assembly and passing through the rotation axis of the tire assembly, and the second surface portion is a portion in a concave region being a half-arc-shaped region in which a concave portion is located at the approximate center in the circumferential direction in a pair of half-arc-shaped regions formed by dividing the annular surface of the upper sidewall and lower sidewall by a virtual straight line perpendicular to the rotation axis of the tire assembly and passing through the rotation axis of the tire assembly, and wherein the convex portion and the concave portion are located on opposite sides with respect to the rotation axis of the tire assembly. With this tire assembly manufacturing method, it is possible to manufacture the tire assembly in which the fit between the wheel and the tire is high.

The technique disclosed in this specification can be realized by various modes, and, for example, can be realized by modes such as a manufacturing method, a fitting method, and a fitting device for a tire assembly, a computer program for realizing each of the methods or the functions of the device, and a storage medium storing the computer program.

### BRIEF DESCRIPTION OF THE DRAWINGS

[FIG. 1] FIG. 1 is a YZ plan view schematically illustrating the external appearance configuration of a fitting device 10 in this embodiment.
[FIG. 2] FIG. 2 is an XY plan view schematically illustrating the external appearance configuration of the fitting device 10 in this embodiment.
[FIG. 3] FIG. 3 is a flowchart illustrating a part of a manufacturing method of a tire assembly 300.
[FIG. 4] FIG. 4 is an explanatory diagram illustrating the top configuration of the tire assembly 300 before the fitting and rollers 240L, 240R.
[FIG. 5] FIG. 5 is an explanatory diagram illustrating the YZ sectional configuration of the tire assembly 300 before the fitting, the right roller 240R, and pressing members 230U, 230D.
[FIG. 6] FIG. 6 is an explanatory diagram illustrating the top configuration of the tire assembly 300 immediately after the fitting, the rollers 240L, 240R, and the second pressing member 230D.
[FIG. 7] FIG. 7 is an explanatory diagram illustrating the YZ sectional configuration of the tire assembly 300 immediately after the fitting, the right roller 240R, and the pressing members 230U, 230D.
[FIG. 8] FIG. 8 is an explanatory diagram illustrating the top configuration of the tire assembly 300 immediately after the fitting, the rollers 240L, 240R, and the second pressing member 230D in a modification.

### MODES FOR CARRYING OUT THE INVENTION

### A. Embodiment:

### A-1. Configuration:

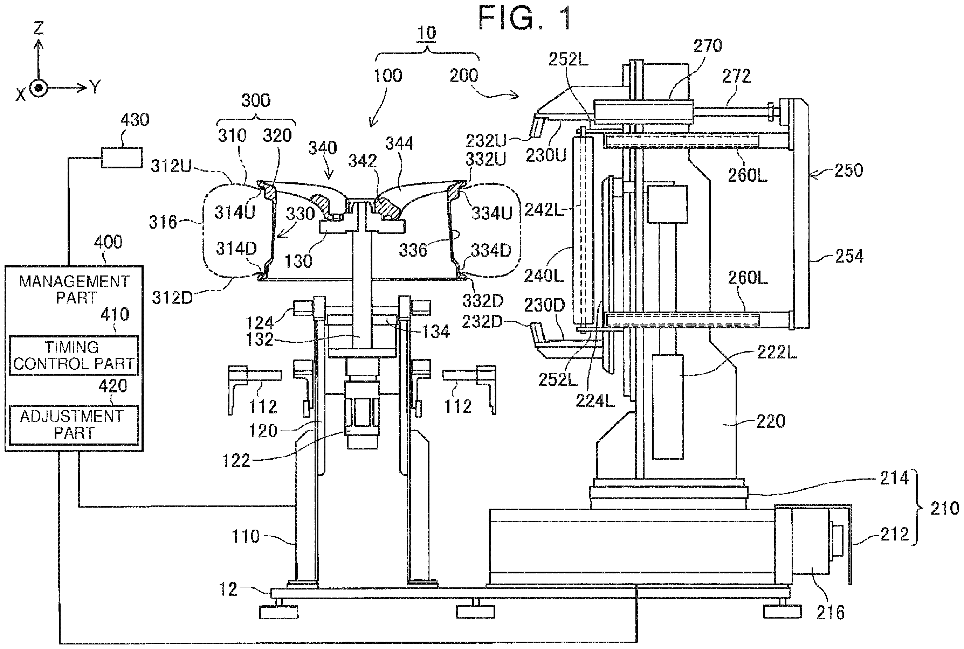

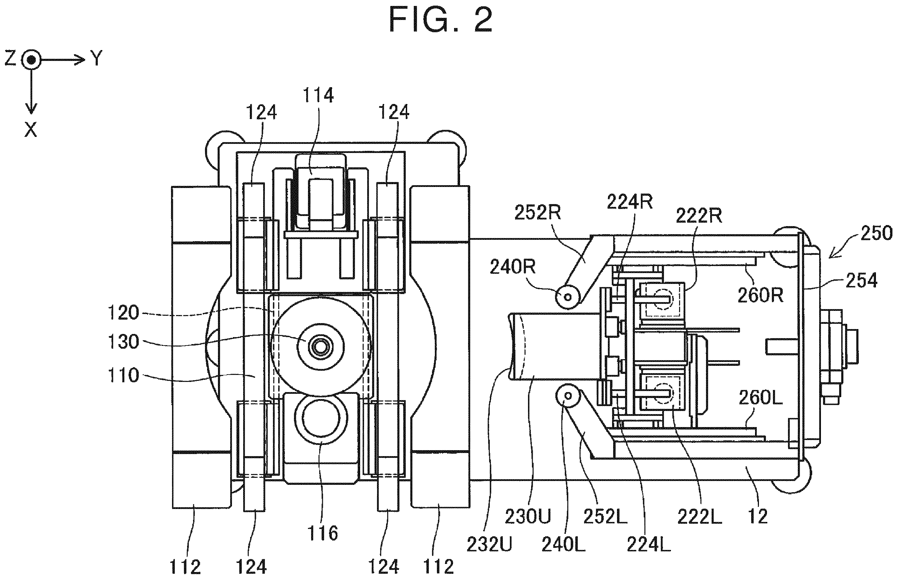

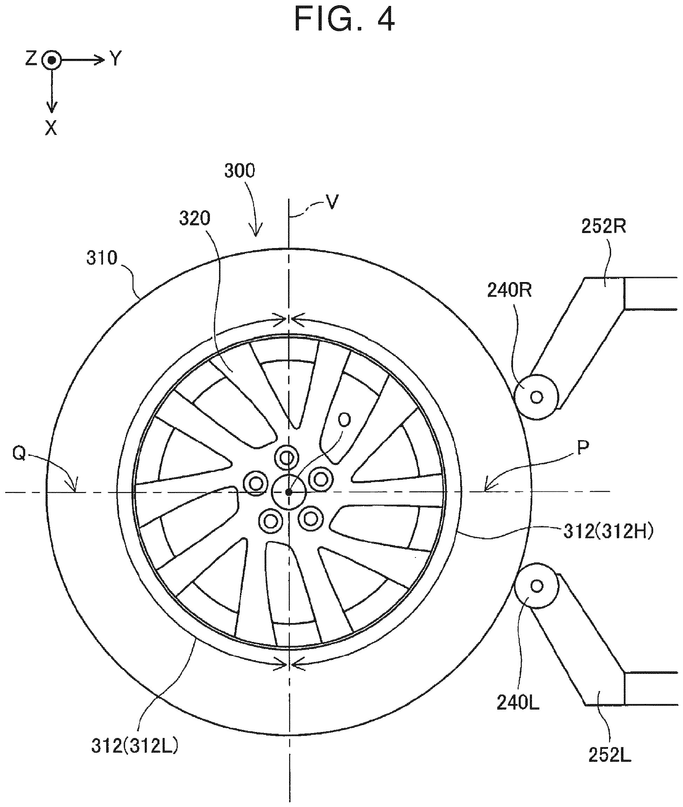

FIG. 1 is a YZ plan view (a side view) schematically illustrating the external appearance configuration of a fitting device 10 in this embodiment, and FIG. 2 is an XY plan view (a top view) schematically illustrating the external appearance configuration of the fitting device 10 in this embodiment. XYZ-axes perpendicular to each other for identifying the directions are indicated in each of the figures. In this specification, for convenience, the Z-direction will be referred to as the up-down direction (the Z-axis positive direction will be referred to as the upward direction, and the Z-axis negative direction will be referred to as the downward direction), the X-direction will be referred to as the left-right direction (the X-axis positive direction will be referred to as the left direction, and the X-axis negative direction will be referred to as the right direction), and the Y-direction will be referred to as the front-rear direction (the Y-axis positive direction will be referred to as the rear direction, and the Y-axis negative direction will be referred to as the front direction). This also applies to FIG. 4 and subsequent figures.

### A-1-1. Configuration of Tire Assembly 300:

As illustrated in FIG. 1, a tire assembly 300 includes a wheel 320 for a vehicle and a tire 310 mounted on the wheel 320. In FIG. 1, the tire assembly 300 is disposed so that the rotation axis direction of the tire assembly 300 generally coincides with the up-down direction (the Z-direction). Hereinafter, the upper side (the Z-axis positive direction side) with respect to the tire assembly 300 will be referred to as "the outer side", and the lower side (the Z-axis negative direction side) will be referred to as "the inner side". When the tire assembly 300 is attached to a vehicle body (not illustrated), the outer side of the tire assembly 300 faces a direction opposite to a direction toward the vehicle body, and the inner side of the tire assembly 300 faces the direction toward the vehicle body. The mode of the tire assembly 300 illustrated in FIG. 1 is only by way of example and may be one of various other modes.

The wheel 320 is made of a light alloy such as, for example, an aluminum alloy or a magnesium alloy. The wheel 320 includes a generally cylindrical wheel rim 330 and a wheel disc 340 disposed on the inner peripheral side of the wheel rim 330. The wheel rim 330 includes a pair of flange portions 332U, 332D, a pair of bead seat portions 334U, 334D, and a drop portion 336 recessed to the radially inner side of the wheel 320 than the bead seat portions 334U, 334D. The wheel disc 340 is located in the wheel rim 330 on the upper side (the outer side) and includes a hub attaching portion 342 (a center bore) and a plurality of spoke portions 344. The wheel 320 may be of a so-called one-piece type in which the wheel rim 330 and the wheel disc 340 are formed integrally with each other, or a so-called two-piece type in which the wheel rim 330 and the wheel disc 340 are separate members. Hereinafter, the flange portion 332U and the bead seat portion 334U located on the upper side (the outer side) in FIG. 1 will be referred to as the upper flange portion 332U and the upper bead seat portion 334U, and the flange portion 332D and the bead seat portion 334D located on the lower side (the inner side) will be referred to as the lower flange portion 332D and the lower bead seat portion 334D.

The tire 310 is formed by including, for example, raw material rubber (natural rubber or synthetic rubber), tire cords, reinforcing members, bead wires, and compounding agents. The tire 310 includes a pair of sidewalls 312U, 312D, a pair of bead portions 314U, 314D, and a tread surface 316. Hereinafter, the sidewall 312U and the bead portion 314U located on the upper side (the outer side) will be referred to as the upper sidewall 312U and the upper bead portion 314U, and the sidewall 312D and the bead portion 314D located on the lower side (the inner side) will be referred to as the lower sidewall 312D and the lower bead portion 314D.

### A-1-2. Configuration of Fitting Device 10:

The fitting device 10 is a device for improving the fit of the tire 310 to the wheel 320 in the tire assembly 300 described above. Specifically, the fitting device 10 causes the tire assembly 300 to approach a state in which the positions of the upper bead portion 314U of the tire 310 relative to the upper bead seat portion 334U of the wheel 320 in the up-down direction (the Z-direction) are approximately uniform over the entire circumference of the tire assembly 300, and the positions of the lower bead portion 314D of the tire 310 relative to the lower bead seat portion 334D of the wheel 320 in the up-down direction are approximately uniform over the entire circumference of the tire assembly 300.

As illustrated in FIGS. 1 and 2, the fitting device 10 includes a support portion 100 that supports the tire assembly 300, and a posture correction portion 200 that corrects the posture of the tire 310 with respect to the wheel 320 in the tire assembly 300 supported by the support portion 100, i.e. that fits the tire 310 to the wheel 320. The support portion 100 and the posture correction portion 200 are fixed on a base plate 12.

### (Support Portion 100)

The support portion 100 includes a lifting unit 110 and a support portion body 120. In FIG. 1, in addition to the fitting device 10, a carry-in device 124 and a carry-out device 112 are illustrated.

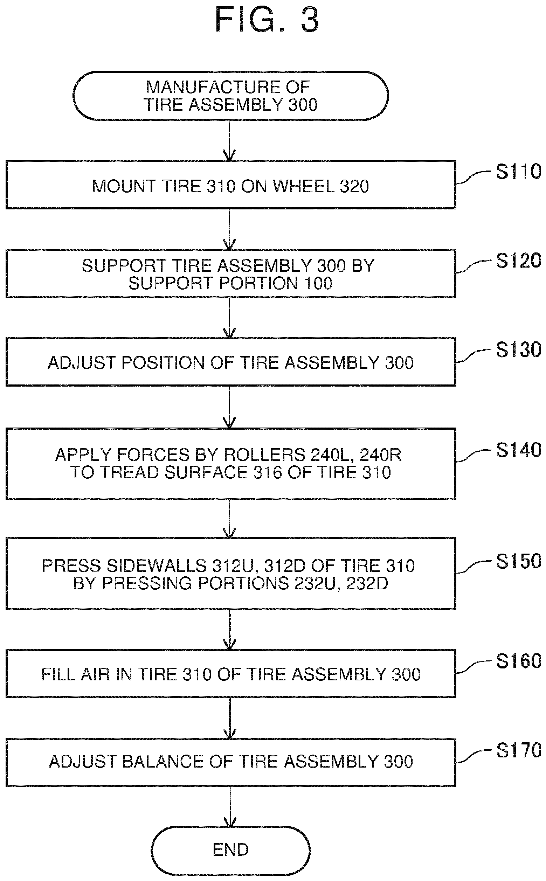

As illustrated in FIG. 2, the carry-in device 124 and the carry-out device 112 each include a pair of tables that are disposed so as to sandwich the lifting unit 110 and the support portion body 120 in the front-rear direction in a view in the up-down direction (the Z-direction). As will be described later, the carry-in device 124 carries in the tire assembly 300 before the fitting, in which the tire 310 is mounted on the wheel 320 in an upstream assembly process, to a position just above the support portion 100 (see S110 and S 120 in FIG. 3 which will be described later). The carry-out device 112 carries out the tire assembly 300 after the fitting from the position just above the support portion 100 to a subsequent process.

The lifting unit 110 vertically raises and lowers the support portion body 120 while supporting the support portion body 120. Specifically, as illustrated in FIG. 2, the lifting unit 110 includes a servomotor 116 (omitted in FIG. 1) and a support cylinder 114. The lifting unit 110 automatically raises the support portion body 120 by a driving force of the servomotor while supporting the weight of the support portion body 120 by the pressure of the support cylinder.

The support portion body 120 has a holding mechanism that holds the wheel 320 of the tire assembly 300. Specifically, the support portion body 120 includes a pole 132 extending in the up-down direction (the Z-direction), a chuck 130 provided at an upper end of the pole 132, and a chuck cylinder 134. The chuck 130 is displaceable from a state in which its outer diameter is smaller than the diameter of a hub hole formed in the hub attaching portion 342 of the wheel 320, to a state in which its outer diameter is slightly greater than the diameter of the hub hole. When a force from the chuck cylinder 134 is applied to the chuck 130 through the pole 132, the outer diameter of the chuck 130 is increased. With this configuration, when the support portion body 120 is raised by the lifting unit 110, the chuck 130 is inserted into the hub hole of the wheel 320 of the tire assembly 300 disposed in the carry-in device 124. Then, when the outer diameter of the chuck 130 is increased by the force from the chuck cylinder 134, the hub hole of the wheel 320 is held by the chuck 130 (see FIG. 1). In this event, the tire assembly 300 is spaced apart from the carry-in device 124.

The support portion body 120 further includes a servomotor 122, and the pole 132 and the chuck 130 are rotated by a driving force of the servomotor 122. Consequently, the support portion 100 can rotate the tire assembly 300 supported by the support portion body 120 about the rotation axis of the tire assembly 300.

### (Posture Correction Portion 200)

The posture correction portion 200 is disposed rearward (on the Y-axis positive direction side) of the support portion 100 and includes a slide unit 210 and a posture correction portion body 220.

The slide unit 210 includes a unit body 212 fixed to the base plate 12, a movable stage 214 provided to be movable on the unit body 212 in the front-rear direction (the Y-direction), and a servomotor 216. The slide unit 210 moves the movable stage 214 in the front-rear direction by a driving force of the servomotor 216.

The posture correction portion body 220 is fixed on the movable stage 214 of the slide unit 210. The posture correction portion body 220 includes a pair of pressing members 230U, 230D and a distance change mechanism. The pressing members 230U, 230D in the pair protrude forward (in the Y-axis negative direction, to the support portion 100 side) from the posture correction portion body 220 and are disposed to face each other in the up-down direction (the Z-direction). The first pressing member 230U located on the upper side is provided in the posture correction portion body 220 so as to be slidable in the up-down direction by a non-illustrated guide mechanism. On a lower surface of the first pressing member 230U is provided a first pressing portion 232U protruding generally downward. Specifically, the first pressing portion 232U protrudes forward and obliquely downward from the lower surface of the first pressing member 230U. The second pressing member 230D located on the lower side is provided just below the first pressing member 230U so as to be slidable in the up-down direction by a non-illustrated guide mechanism. On an upper surface of the second pressing member 230D is provided a second pressing portion 232D protruding generally upward. Specifically, the second pressing portion 232D protrudes forward and obliquely upward from the upper surface of the second pressing member 230D. The pressing portions 232U, 232D are generally arc-shaped in a view in the up-down direction so as to correspond to an annular shape of the tire 310 (see FIG. 2 etc.).

The distance change mechanism changes the spacing distance between the first pressing member 230U and the second pressing member 230D in the up-down direction (the Z-direction). Specifically, the distance change mechanism includes a pair of electric cylinders 222L, 222R and a pair of linking arms 224L, 224R. As illustrated in FIGS. 1 and 2, the second pressing member 230D is linked to the electric cylinder 222L located on the left side through the linking arm 224L located on the left side. When a rod of the electric cylinder 222L extends upward, its push-up force is transmitted to the second pressing member 230D through the linking arm 224L so that the second pressing member 230D is moved upward. As illustrated in FIG. 2, the first pressing member 230U is linked to the electric cylinder 222R located on the right side through the linking arm 224R located on the right side. When a rod of the electric cylinder 222R contracts downward, its push-down force is transmitted to the first pressing member 230U through the linking arm 224R so that the first pressing member 230U is moved downward.

The posture correction portion body 220 further includes a pair of rollers 240L, 240R and an advance mechanism. The rollers 240L, 240R in the pair protrude forward (in the Y-axis negative direction, to the support portion 100 side) from the posture correction portion body 220 and are disposed to face each other in the left-right direction (the X-direction). Each of the rollers 240L, 240R is generally cylindrical and is disposed with its axial direction along the up-down direction. The rollers 240L, 240R in the pair correspond to an application portion or application members in the claims.

The advance mechanism includes a roller frame 250, a pair of roller guides 260L, 260R, and a pair of air cylinders 270 (omitted in FIG. 2). The roller frame 250 includes a base portion 254, a pair of left frames 252L, and a pair of right frames 252R. The base portion 254 is located rearward (on the Y-axis positive direction side) of the posture correction portion body 220. The left frames 252L in the pair are disposed to protrude forward from left end portions of the base portion 254. The left frames 252L in the pair face each other and are spaced apart from each other in the up-down direction, and support the left roller 240L between distal end portions of the left frames 252L in the pair via a rotary shaft 242L in such a way that the left roller 240L is rotatable. Likewise, the right frames 252R in the pair are disposed to protrude forward from right end portions of the base portion 254. The right frames 252R in the pair face each other and are spaced apart from each other in the up-down direction, and support the right roller 240R between distal end portions of the right frames 252R in the pair via a rotary shaft (not illustrated) in such a way that the right roller 240R is rotatable.

The left roller guide 260L supports the left frames 252L in the roller frame 250 in such a way as to be able to guide the left frames 252L in the front-rear direction (the Y-direction), and the right roller guide 260R supports the right frames 252R in the roller frame 250 in such a way as to be able to guide the right frames 252R in the front-rear direction. The air cylinders 270 in the pair are disposed side by side in the left-right direction (the X-direction) on the upper side of the roller frame 250. Rods 272 of the air cylinders 270 are linked to the roller frame 250 so that when the rods 272 contract, the rollers 240L, 240R in the pair are advanced, and when the rods 272 extend, the rollers 240L, 240R in the pair are retreated.

### (Management Part 400)

The fitting device 10 further includes a management part 400. The management part 400 includes a timing control part 410, an adjustment part 420, and a detection part 430. As will be described later, the timing control part 410 controls the posture correction portion body 220 to start pressing the tire 310 of the tire assembly 300 by the pressing portions 232U, 232D in the pair in the state where forces by the rollers 240L, 240R in the pair are applied to the tire 310 in advance (see S140 and S 150 in FIG. 3 which will be described later). The detection part 430 detects concave-convex states in the surfaces of the sidewalls 312U, 312D of the tire 310 of the tire assembly 300 supported by the support portion 100. The detection part 430 detects the concave-convex states in the surfaces of the sidewalls 312U, 312D by, for example, an optical measurement method, a technique of image analysis of the surfaces of the sidewalls 312U, 312D of the tire 310, or the like. The adjustment part 420 controls the posture correction portion body 220 to adjust the relative positions between the tire assembly 300 and the pressing portions 232U, 232D based on the detection results of the detection part 430 so that the pressing portions 232U, 232D can press surface portions on the convex portion side in the surfaces of the sidewalls 312U, 312D of the tire 310 (see S130 in FIG. 3 which will be described later). The management part 400 may be disposed outside the support portion 100 and the posture correction portion 200 or may be incorporated in either of the support portion 100 and the posture correction portion 200.

### A-2. Manufacturing Method of Tire Assembly 300 Using Fitting Device 10:

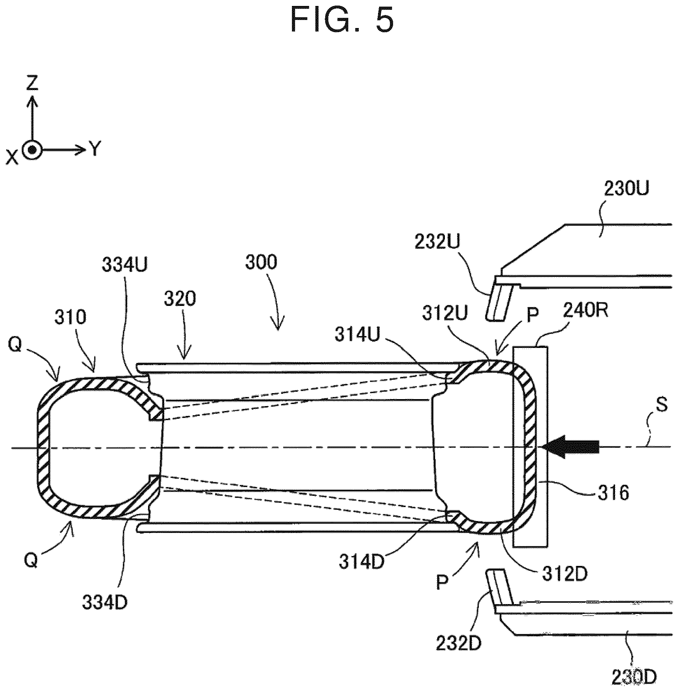

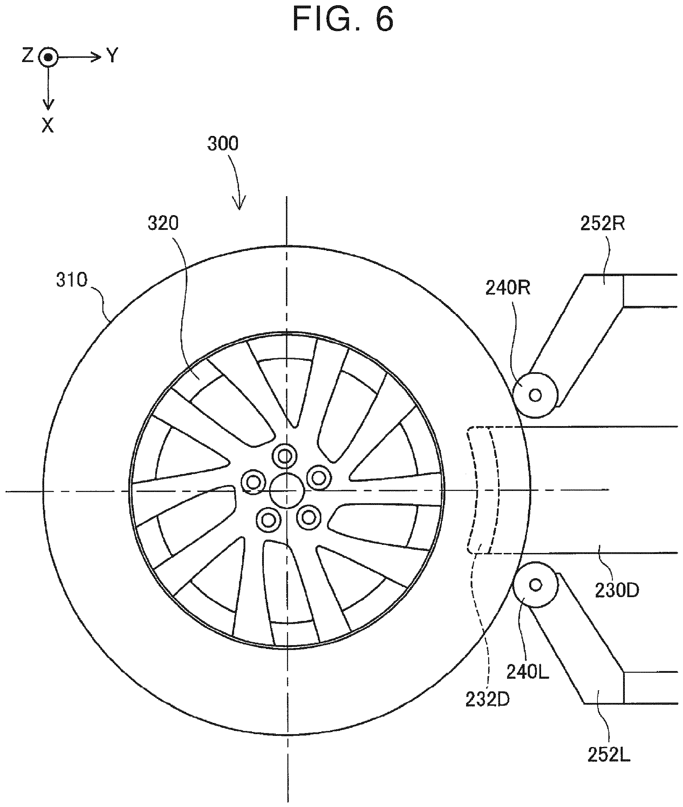

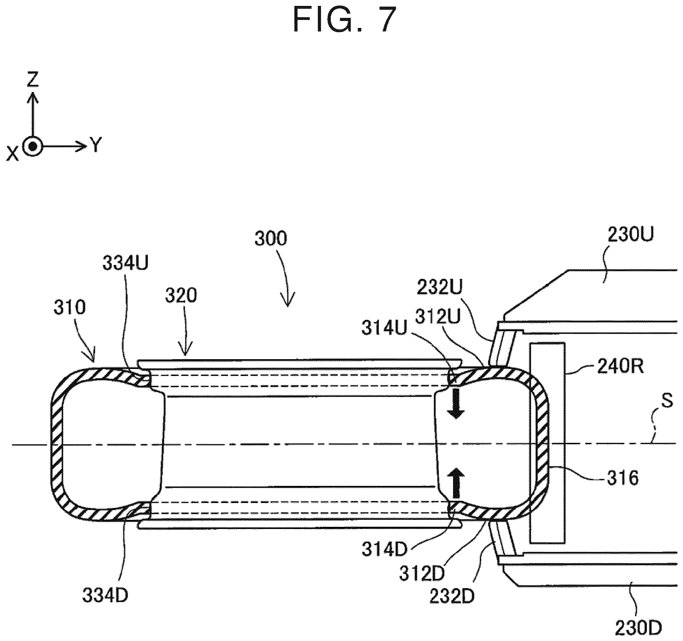

FIG. 3 is a flowchart illustrating a part of a manufacturing method of the tire assembly 300. FIG. 4 is an explanatory diagram illustrating the top configuration of the tire assembly 300 before the fitting and the rollers 240L, 240R, and FIG. 5 is an explanatory diagram illustrating the YZ sectional configuration of the tire assembly 300 before the fitting, the right roller 240R, and the pressing members 230U, 230D. FIG. 6 is an explanatory diagram illustrating the top configuration of the tire assembly 300 immediately after the fitting, the rollers 240L, 240R, and the second pressing member 230D, and FIG. 7 is an explanatory diagram illustrating the YZ sectional configuration of the tire assembly 300 immediately after the fitting, the right roller 240R, and the pressing members 230U, 230D.

### (Assembly Process)

As illustrated in FIG. 3, first, an assembly process of the tire assembly 300 is performed (S110). In the assembly process, the tire 310 is mounted on the wheel 320 by a non-illustrated assembly device to form the tire assembly 300 before the fitting.

Herein, since the fit of the tire assembly 300 before the fitting is low, there are cases where the tire 310 is slightly deformed from the original shape as the single product so that a convex portion P and a concave portion Q are present in each of the surfaces of the sidewalls 312U, 312D of the tire 310. The convex portion P is, in each of the surfaces of the sidewalls 312U, 312D, a surface portion where the distance from a rim center plane S of the wheel 320 is the longest, and the concave portion Q is, in each of the surfaces of the sidewalls 312U, 312D, a surface portion where the distance from the rim center plane S of the wheel 320 is the shortest. The rim center plane S is a virtual plane that passes through the center of the wheel 320 in its rotation axis direction and is perpendicular to the rotation axis of the wheel 320. The convex portion P and the concave portion Q are located on the sides generally opposite to each other with respect to the rotation axis of the tire assembly 300. A main cause of the presence of the convex portions P and the concave portions Q is, for example, as follows. That is, the distance between the upper bead portion 314U and the lower bead portion 314D at one portion of the tire 310 in its circumferential direction becomes relatively long, and correspondingly, the distance between the upper bead portion 314U and the lower bead portion 314D at a portion of the tire 310 in its circumferential direction on the side opposite to the one portion becomes relatively short. Consequently, the convex portions P are respectively formed in the upper sidewall 312U and the lower sidewall 312D at the one portion of the tire 310, and the concave portions Q are respectively formed in the upper sidewall 312U and the lower sidewall 312D at the portion of the tire 310 on the opposite side. Hereinafter, as illustrated in FIG. 4, in a pair of half-arc-shaped regions formed by dividing the annular surface of each of the sidewalls 312U, 312D by a virtual straight line V perpendicular to the rotation axis O of the tire assembly 300 and passing through the rotation axis O of the tire assembly 300, the half-arc-shaped region in which the convex portion P is located at the approximate center in the circumferential direction will be referred to as a convex region 312H, and the half-arc-shaped region in which the concave portion Q is located at the approximate center in the circumferential direction will be referred to as a concave region 312L.

### (Support Process)

Next, a support process of the tire assembly 300 before the fitting is performed (S120). In the support process, for example, the tire assembly 300 before the fitting is carried from the assembly device to the fitting device 10 side by the carry-in device 124 and disposed at the position just above the support portion 100. Then, for example, as described above, the management part 400 causes the support portion 100 to support the tire assembly 300 before the fitting (see FIG. 1).

### (Adjustment Process of Position)

Next, an adjustment process of the relative positions between the tire assembly 300 and the posture correction portion body 220 is performed (S130). In the adjustment process, for example, the management part 400 detects, based on the detection results of the detection part 430, at least one of the convex portions P and the concave portions Q in the outer surfaces of the sidewalls 312U, 312D of the tire 310, and controls the support portion 100 to rotate the tire assembly 300 so that the convex regions 312H in the sidewalls 312U, 312D of the tire 310 are located on the posture correction portion body 220 side (see FIGS. 4 and 5).

### (Application Process)

Next, an application process of applying forces by the rollers 240L, 240R in the pair to the tire assembly 300 supported by the support portion 100 is performed (S140). In the application process, for example, the management part 400 causes the posture correction portion body 220 to slide by the slide unit 210 so as to adjust the distance between the tire assembly 300 supported by the support portion 100 and the posture correction portion body 220 to a predetermined distance and, further, controls the posture correction portion body 220 to advance the roller frame 250. As illustrated in FIGS. 4 and 5, when the advancing rollers 240L, 240R in the pair are pressed against the tread surface 316 of the tire 310, a force in the direction in which the convex region 312H side of the tire assembly 300 is displaced toward the wheel 320 side (the concave region 312L side) is applied to the tire 310 (see a black arrow in FIG. 5; hereinafter, this force will be referred to as a "convex portion side application force"). Like in this embodiment, it is preferable that the forces by the rollers 240L, 240R be applied to the tread surface 316 continuously over its entire width in the up-down direction (the Z-direction). With this configuration, the forces by the rollers 240L, 240R can be applied to the entire tire 310, and therefore, for example, compared to a configuration in which the forces are applied to the tread surface 316 at only a part in the up-down direction, it is possible to suppress that the tread surface 316 of the tire 310 is depressed to prevent the generation of the sufficient convex portion side application force.

### (Pressing Process)

Next, a pressing process of pressing the tire 310 of the tire assembly 300, supported by the support portion 100, by the pressing portions 232U, 232D in the pair is performed (S150). In the pressing process, for example, the management part 400 controls the posture correction portion body 220 to shorten the spacing distance between the first pressing member 230U and the second pressing member 230D. Consequently, as illustrated in FIGS. 6 and 7, the first pressing portion 232U of the first pressing member 230U comes in contact with and presses downward the convex region 312H in the upper sidewall 312U of the tire 310 of the tire assembly 300. Further, the second pressing portion 232D of the second pressing member 230D comes in contact with and presses upward the convex region 312H in the lower sidewall 312D of the tire 310. That is, the portion on the convex region 312H side in the tire 310 is sandwiched in the up-down direction by the first pressing member 230U and the second pressing member 230D. Preferably, a pressing force by the first pressing member 230U and a pressing force by the second pressing member 230D are approximately equal to each other.

In the upper sidewall 312U of the tire 310, when the convex region 312H is pressed by the first pressing portion 232U, the distal end of the upper bead portion 314U corresponding to the convex region 312H is moved to the rim center plane S side. On the other hand, the concave region 312L is not supported by the support portion 100 and is displaceable to the side opposite to the rim center plane S. Therefore, by the movement of the distal end of the upper bead portion 314U corresponding to the convex region 312H, the distal end of the upper bead portion 314U corresponding to the concave region 312L is made to easily move. Then, by a restoring force of the tire 310 to return to its original shape, the distal end of the upper bead portion 314U corresponding to the convex region 312H and the distal end of the upper bead portion 314U corresponding to the concave region 312L are located at approximately the same position in the up-down direction (the Z-direction) on the upper bead seat portion 334U of the wheel 320. Likewise, in the lower sidewall 312D of the tire 310, when the convex region 312H is pressed by the second pressing portion 232D, the distal end of the lower bead portion 314D corresponding to the convex region 312H is moved to the rim center plane S side. On the other hand, the concave region 312L is not supported by the support portion 100 and is displaceable to the side opposite to the rim center plane S. Therefore, by the movement of the distal end of the lower bead portion 314D corresponding to the convex region 312H, the distal end of the lower bead portion 314D corresponding to the concave region 312L is made to easily move. Then, by the restoring force of the tire 310 to return to its original shape, the distal end of the lower bead portion 314D corresponding to the convex region 312H and the distal end of the lower bead portion 314D corresponding to the concave region 312L are located at approximately the same position in the up-down direction on the lower bead seat portion 334D of the wheel 320. That is, the fit of the tire 310 to the wheel 320 is improved. Consequently, force variation (RFV and LFV) of the tire assembly 300 after the air filling is improved.

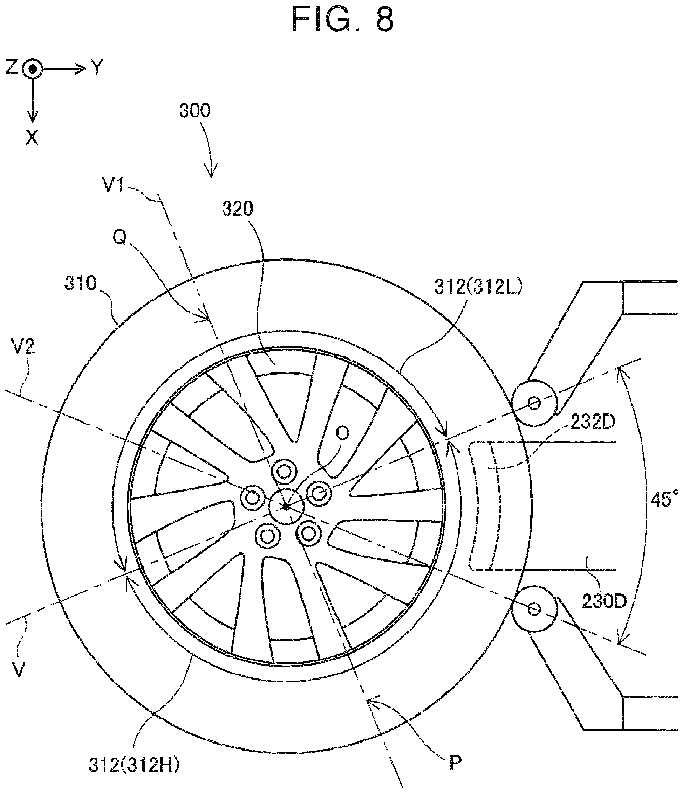

In FIGS. 4 and 6, there is illustrated a mode in which the pressing portions 232U, 232D directly press the convex portions P in the convex regions 312H of the tire 310. However, not limited to this, the pressing portions 232U, 232D each may press a portion other than the convex portion P in the convex region 312H. Specifically, the portion other than the convex portion P is a portion located between the convex portion P and a portion moved by about 90 degrees from the convex portion P in the circumferential direction of the tire 310. Herein, FIG. 8 is an explanatory diagram illustrating the top configuration of the tire assembly 300 immediately after the fitting, the rollers 240L, 240R, and the second pressing member 230D in a modification. In FIG. 8, a first virtual straight line V1 and a second virtual straight line V2 are illustrated in addition to the virtual straight line V described above. The first virtual straight line V1 is a straight line passing through the rotation axis O and passing through the convex portion P and the concave portion Q. The second virtual straight line V2 is a straight line passing through the rotation axis O and forming an angle of 45 degrees with each of the virtual straight line V and the first virtual straight line V1. As illustrated in FIG. 8, it is preferable that a pressing portion by each of the pressing portions 232U, 232D be a portion in the convex region 312H between a position moved by 45 degrees from the convex portion P and a position moved by 90 degrees from the convex portion P (a portion defined by the virtual straight line V and the second virtual straight line V2 in the convex region 312H). In this case, compared to the configuration in which the pressing portions 232U, 232D directly press the convex portions P, the fit of the tire assembly 300 can be improved more smoothly. Compared to the configuration of directly pressing the convex portion P, it is expected that the degree of freedom of vertical movement of both the distal end of the lower bead portion 314D corresponding to the convex region 312H and the distal end of the lower bead portion 314D corresponding to the concave region 312L increases, resulting in that the fit of the tire 310 to the wheel 320 tends to be improved by the restoring force of the tire 310. The pressing portion by each of the pressing portions 232U, 232D may alternatively be a portion in the convex region 312H between the convex portion P and a position moved by 45 degrees from the convex portion P (a portion defined by the first virtual straight line V1 and the second virtual straight line V2 in the convex region 312H).

### (Other Processes)

Next, the tire assembly 300 after the fitting is carried by the carry-out device 112, and an air filling process of filling compressed air in the tire 310 of the tire assembly 300 is performed (S160). Thereafter, a balance adjustment process is performed for the tire assembly 300 after the air filling (S170). In the balance adjustment process, first, the mass distribution of the tire assembly 300 in the circumferential direction is measured. Herein, since the fit of the tire assembly 300 is high, it is possible to suppress a reduction in the measurement accuracy of the mass distribution that is otherwise caused due to the fit being low. Next, based on the measurement results of the mass distribution, processing, such as weighting, is applied to the tire assembly 300 so as to suppress variation in the mass distribution. Through the processes described above, the tire assembly 300 with high quality is manufactured in which the fit is high, and variation in the mass distribution and force variation (RFV and LFV) are suppressed after the air filling.

### A-3. Effects of This Embodiment:

As described above, in this embodiment, the pressing portion 232U, 232D is configured to press a first surface portion (a portion in the convex region 312H, e.g. a portion including the convex portion P) in the surface of at least one of the sidewalls 312U, 312D of the tire 310. The support portion 100 is configured to support the tire assembly 300 so that a second surface portion (a portion in the concave region 312L) located on the side opposite to the first surface portion with respect to the rotation axis O of the tire assembly 300 in the surface of the sidewall 312U, 312D is displaceable in the direction away from the rim center plane S. Therefore, while supporting the tire assembly 300 by the support portion 100 in the state where the concave portion side (the second surface portion) of the sidewall 312U, 312D of the tire 310 is displaceable in the direction in which the tire 310 is inflated, it is possible to press the convex portion side (the first surface portion) of the sidewall 312U, 312D of the tire 310 by the pressing portion 232U, 232D. Consequently, according to this embodiment, it is possible to improve the fit of the tire 310 to the wheel 320.

As described above, the first pressing portion 232U protrudes forward and obliquely downward from the lower surface of the first pressing member 230U. Further, the second pressing portion 232D protrudes forward and obliquely upward from the upper surface of the second pressing member 230D. Consequently, in the later-described pressing process (S150), for example, by the pressing of the first pressing portion 232U, the tire 310 is applied with a force that causes the upper bead portion 314U to approach the rim center plane S, and in addition, a force directed toward the rotation axis O, and therefore, it is possible to improve the fit of the tire 310 to the wheel 320 more smoothly.

Further, in this embodiment, the forces by the rollers 240L, 240R in the pair are applied to the tire assembly 300 supported by the support portion 100 (S140 in FIG. 3). Consequently, compared to a configuration in which the forces by the rollers 240L, 240R are not applied to the tire 310, the bead portions 314U, 314D of the tire 310 easily move on the bead seat portions 334U, 334D of the wheel 320 on the first surface portion side of the sidewalls 312U, 312D of the tire 310, and therefore, it is possible to improve the fit of the tire 310 to the wheel 320 more reliably. Further, by applying the forces by the rollers 240L, 240R, it is possible to suppress the inclination of the wheel 320 due to the pressing forces by the pressing portions 232U, 232D. Further, since the forces by the rollers 240L, 240R in the pair are applied to the tire 310, compared to a configuration in which the force by only one of the rollers 240L, 240R in the pair is applied to the tire 310, the convex portion side application force described above can be reliably applied to the tire 310, and as a result, it is possible to improve the fit of the tire 310 to the wheel 320 more effectively.

Further, in this embodiment, the pressing against the tire 310 of the tire assembly 300 by the pressing portions 232U, 232D in the pair is started in the state where the forces by the rollers 240L, 240R in the pair are applied to the tire 310 in advance (S140 and S150 in FIG. 3). Consequently, the displacement of the wheel 320 is suppressed by the forces by the rollers 240L, 240R and the supporting force by the support portion 100, and therefore, it is possible to suppress that the fit of the tire 310 to the wheel 320 is lowered due to the displacement of the wheel 320. Further, as illustrated in FIGS. 6 and 8, the rollers 240L, 240R in the pair are disposed so that the pressing positions of the pressing portions 232U, 232D are located between the rollers 240L, 240R in the pair (e.g. at the middle position therebetween) in the circumferential direction of the tire 310 in a view in the up-down direction (the Z-direction). Therefore, it is possible to perform the pressing by the pressing portions 232U, 232D and the application of the forces by the rollers 240L, 240R in the pair while suppressing the rotation of the tire assembly 300.

Further, in the above-described embodiment, in the support process (S120), it is possible to automatically adjust the relative positions between the tire assembly 300 and the pressing portions 232U, 232D based on the detection results of the detection part 430 so that the pressing portions 232U, 232D can press the convex regions 312H of the tire 310.

### B. Modifications:

The technique disclosed in this specification is not limited to the embodiment described above and can be modified to various modes within the scope not departing from the gist thereof. For example, the following modifications are made possible.

The configuration of the fitting device 10 in the above-described embodiment is only one example and can be modified in various ways. For example, the fitting device 10 may be configured such that the support portion 100 and the posture correction portion 200 are individually operated without including the management part 400. Further, the support portion 100 may be a configuration not including the lifting unit 110. Further, the support portion 100 may be configured to hold the inner peripheral side of the wheel rim 330 of the wheel 320 of the tire assembly 300. Further, the support portion 100 may be a configuration not including the configuration of rotating the tire assembly 300.

The posture correction portion body 220 may be configured to include only one of the first pressing portion 232U and the second pressing portion 232D and to press only one of the sidewalls of the tire 310 by the one of the pressing portions. Further, the shape of the pressing portions 232U, 232D may be a shape other than the arc shape. Further, the posture correction portion body 220 may be a configuration not including either of the rollers 240L, 240R in the pair, or may be a configuration including only one of the rollers 240L, 240R in the pair or three or more rollers. Further, as the application member, it is not limited to the roller and may be one having another shape such as, for example, a flat plate shape. Further, in the above-described embodiment, the convex portion side application force described above may be applied to the tire 310 by pulling the concave region 312L side of the tire 310.

The manufacturing method of the tire assembly 300 in the above-described embodiment is only one example and can be modified in various ways. For example, in the above-described embodiment, in the support process (S120), the support portion 100 may support the tire assembly 300 in a state in which the outer side faces downward. Further, the support portion 100 is not limited to supporting the tire assembly 300 in a transverse state in which the rim center plane S is horizontal. For example, the tire assembly 300 may be supported in an upright state in which the rim center plane S is vertical, and the correction process (S130 to S150) by the posture correction portion body 220 may be performed for the tire assembly 300 in the upright state. Further, in the support process, the relative positions between the tire assembly 300 and the pressing portions 232U, 232D may be adjusted by rotating the posture correction portion body 220 side without rotating the tire assembly 300.

In FIG. 3 of the above-described embodiment, the air filling process (S160) may be performed before S120. However, when the correction process (S130 to S150) by the posture correction portion body 220 is performed for the tire assembly 300 before the air filling process like in the above-described embodiment, it is possible to improve the fit of the tire assembly 300 more effectively.

### DESCRIPTION OF SIGNS

10: fitting device 12: base plate 100: support portion 110: lifting unit 112: carry-out device 114: support cylinder 116, 122: servomotor 120: support portion body 124: carry-in device 130: chuck 132: pole 134: chuck cylinder 200: posture correction portion 210: slide unit 212: unit body 214: movable stage 216: servomotor 220: posture correction portion body 222L, 222R: electric cylinder 224L, 224R: linking arm 230U, 230D: pressing member 232U, 232D: pressing portion 240L, 240R: roller 242L: rotary shaft 250: roller frame 252L: left frame 252R: right frame 254: base portion 260L, 260R: roller guide 270: air cylinder 272: rod 300: tire assembly 310: tire 312D: lower sidewall 312H: convex region 312L: concave region 312U: upper sidewall 314D: lower bead portion 314U: upper bead portion 316: tread surface 320: wheel 330: wheel rim 332D: lower flange portion 332U: upper flange portion 334D: lower bead seat portion 334U: upper bead seat portion 336: drop portion 340: wheel disc 342: hub attaching portion 344: spoke portion 400: management part 410: timing control part 420: adjustment part 430: detection part O: rotation axis P: convex portion Q: concave portion S: rim center plane V1: first virtual straight line V2: second virtual straight line V: virtual straight line

## Claims

1. A fitting device (10) for a tire assembly (300) including a wheel (320) and a tire (310) mounted on the wheel (320), wherein the tire (310) includes a pair of sidewalls (312U, 312D), a pair of bead portions (314U, 314D) and a tread surface (316), the fitting device (10) configured to fit the bead portion (314D, 314U) of the tire (310) to the bead seat portion (334D, 334U) of the wheel (320), the fitting device (10) comprising:
a support portion (100) configured to support the tire assembly (300); and
a pressing portion (232U, 232D),
wherein:
the pressing portion (232U, 232D) is configured to press a first surface portion in a surface of at least one of sidewalls (312U, 312D) of the tire (310); and
the support portion (100) is configured to support the tire assembly (300) so that a second surface portion located in the surface of the at least one sidewall on an opposite side of a rotation axis (O) of the tire assembly (300) from the first surface portion is displaceable in a direction away from a rim center plane (S) of the wheel (320),
wherein the rim center plane (S) is a virtual plane that passes through the center of the wheel (320) in its rotation axis direction and is perpendicular to the rotation axis of the wheel (320),
wherein the first surface portion is a portion in a convex region (312H) being a half-arc-shaped region in which a convex portion (P) is located at the approximate center in the circumferential direction in a pair of half-arc-shaped regions formed by dividing the annular surface of an upper sidewall (312U) and lower sidewall (312D) by a virtual straight line (V) perpendicular to the rotation axis of the tire assembly (300) and passing through the rotation axis of the tire assembly (300),
wherein the second surface portion is a portion in a concave region (312L) being a half-arc-shaped region in which a concave portion (Q) is located at the approximate center in the circumferential direction in a pair of half-arc-shaped regions formed by dividing the annular surface of the upper sidewall (312U) and lower sidewall (312D) by a virtual straight line (V) perpendicular to the rotation axis of the tire assembly (300) and passing through the rotation axis of the tire assembly (300),
wherein the convex portion (P) is, in each of the surfaces of the upper sidewall (312U) and lower sidewall (312D), a surface portion where a distance from a rim center plane (S) of the wheel is the longest, and the concave portion (Q) is, in each of the surfaces of the upper sidewall (312U) and lower sidewall (312D), a surface portion where the distance from the rim center plane (S) of the wheel is the shortest, and
wherein the convex portion (P) and the concave portion (Q) are located on opposite sides with respect to the rotation axis of the tire assembly (300).

2. The fitting device (10) for the tire assembly (300) according to claim 1, further comprising an application portion configured to apply, to the tread surface (316) of the tire (310), a force in a direction in which the first surface portion of the sidewall is displaced toward the wheel side.

3. The fitting device (10) for the tire assembly (300) according to claim 2, wherein the application portion includes two or more application members configured to respectively apply forces to portions in a tread surface (316) of the tire (310), the portions being spaced apart from each other in a circumferential direction of the tire (310).

4. The fitting device (10) for the tire assembly (300) according to claim 2 or 3, wherein:
the fitting device (10) further comprises a timing control part (410); and
the timing control part (410) is configured to:
cause the force by the application portion to be applied to the tire (310); and
in a state in which the force by the application portion is applied to the tire (310), cause the pressing portion (232U, 232D) to start pressing the first surface portion of the tire (310).

5. The fitting device (10) for the tire assembly (300) according to any one of claims 1 to 4, further comprising:
a detection part (430) configured to detect a concave-convex state in the surface of the sidewall of the tire (310) of the tire assembly (300) supported by the support portion (100), wherein the concave-convex state is a state of the tire assembly before fitting of the bead portion of the tire to the bead seat portion of the wheel, where the tire is slightly deformed from the original shape so that a convex portion (P) and a concave portion (Q) are present in each of the surfaces of the upper sidewall (312U) and the lower sidewall (312D); and
an adjustment part (420) configured to, based on a detection result of the detection part (430), adjust relative positions between the tire assembly (300) and the pressing portion (232U, 232D) so that the pressing portion (232U, 232D) is able to press a surface portion on a convex portion (P) side in the surface of the sidewall.

6. The fitting device (10) for the tire assembly (300) according to claim 5, wherein the surface portion on the convex portion (P) side is a surface portion located in the surface of the sidewall between the convex portion (P) and a portion moved by 90 degrees from the convex portion (P) in the circumferential direction of the tire (310).

7. A method for manufacturing tire assembly (300) comprising:
an assembly step of forming a tire assembly (300) by mounting a tire (310) having a bead portion (314D, 314U) on a wheel (320) having a bead seat portion (334D, 334U); and
after the assembly step fitting a bead portion (314D, 314U) of the tire (310) to a bead seat portion (334D, 334U) of the wheel (320) using an fitting device (10) according to any one of claims 1 to 6, and including
a pressing step of, while pressing a first surface portion located in a surface of at least one of sidewalls of the tire (310) on a side of a convex portion (P) where a distance from a rim center plane (S) of the wheel (320) is the longest, allowing a second surface portion to be displaceable in a direction away from the rim center plane (S), the second surface portion located in the surface of the sidewall on a side of a concave portion (Q) where the distance from the rim center plane (S) is the shortest,
wherein before fitting of the bead portion of the tire to the bead seat portion of the wheel, the tire assembly is in a concave-convex state, where the tire is slightly deformed from the original shape so that a convex portion (P) and a concave portion (Q) are present in each of the surfaces of a upper sidewall (312U) and a lower sidewall (312D),
wherein the rim center plane (S) is a virtual plane that passes through the center of the wheel (320) in its rotation axis direction and is perpendicular to the rotation axis of the wheel (320),
wherein the first surface portion is a portion in a convex region (312H) being a half-arc-shaped region in which a convex portion (P) is located at the approximate center in the circumferential direction in a pair of half-arc-shaped regions formed by dividing the annular surface of the upper sidewall (312U) and lower sidewall (312D) by a virtual straight line (V) perpendicular to the rotation axis of the tire assembly (300) and passing through the rotation axis of the tire assembly (300), and
the second surface portion is a portion in a concave region (312L) being a half-arc-shaped region in which a concave portion (Q) is located at the approximate center in the circumferential direction in a pair of half-arc-shaped regions formed by dividing the annular surface of the upper sidewall (312U) and lower sidewall (312D) by a virtual straight line (V) perpendicular to the rotation axis of the tire assembly (300) and passing through the rotation axis of the tire assembly (300), and
wherein the convex portion (P) and the concave portion (Q) are located on opposite sides with respect to the rotation axis of the tire assembly (300).

## Patentansprüche

1. Anpassvorrichtung (10) für eine Reifenanordnung (300), die ein Rad (320) und einen auf dem Rad (320) montierten Reifen (310) umfasst, wobei der Reifen (310) ein Paar Seitenwände (312U, 312D), ein Paar Wulstabschnitte (314U, 314D) und eine Lauffläche (316) aufweist, wobei die Anpassvorrichtung (10) dazu konfiguriert ist, dass sie den Wulstabschnitt (314D, 314U) des Reifens (310) an den Wulstsitzabschnitt (334D, 334U) des Rades (320) anpasst, wobei die Anpassvorrichtung (10) aufweist:
einen Stützabschnitt (100), der dazu konfiguriert ist, dass er die Reifenanordnung (300) stützt; und
einen Drückabschnitt (232U, 232D),
wobei:
der Drückabschnitt (232U, 232D) dazu konfiguriert ist, dass er einen ersten Oberflächenabschnitt auf einer Oberfläche von mindestens einer der Seitenwände (312U, 312D) des Reifens (310) drückt; und
der Stützabschnitt (100) dazu konfiguriert ist, dass er die Reifenanordnung (300) derart stützt, dass ein zweiter Oberflächenabschnitt, der auf der Oberfläche der mindestens einen Seitenwand auf einer gegenüberliegenden Seite einer Rotationsachse (O) der Reifenanordnung (300) von dem ersten Oberflächenabschnitt angeordnet ist, in eine Richtung weg von einer Felgenmittelebene (S) des Rades (320) verschiebbar ist,
wobei die Felgenmittelebene (S) eine virtuelle Ebene ist, die durch die Mitte des Rades (320) in seiner Drehachsenrichtung verläuft und senkrecht zu der Drehachse des Rades (320) ist,
wobei der erste Oberflächenabschnitt ein Abschnitt in einem konvexen Bereich (312H) ist, der ein halbbogenförmiger Bereich ist, in dem sich ein konvexer Abschnitt (P) in der ungefähren Mitte in der Umfangsrichtung in einem Paar halbbogenförmiger Bereiche angeordnet ist, die durch Teilen der ringförmigen Oberfläche der oberen Seitenwand (312U) und der unteren Seitenwand (312D) durch eine virtuelle gerade Linie (V), die senkrecht zu der Drehachse der Reifenanordnung (300) ist und durch die Drehachse der Reifenanordnung (300) verläuft, gebildet sind,
wobei der zweite Oberflächenabschnitt ein Abschnitt in einem konkaven Bereich (312L) ist, der ein halbbogenförmiger Bereich ist, in dem ein konkaver Abschnitt (Q) in der ungefähren Mitte in der Umfangsrichtung in einem Paar halbbogenförmiger Bereiche angeordnet ist, die durch Teilen der ringförmigen Oberfläche der oberen Seitenwand (312U) und der unteren Seitenwand (312D) durch eine virtuelle gerade Linie (V), die senkrecht zu der Drehachse der Reifenanordnung (300) ist und durch die Drehachse der Reifenanordnung (300) verläuft, gebildet sind,
wobei der konvexe Abschnitt (P) auf jeder der Oberflächen der oberen Seitenwand (312U) und der unteren Seitenwand (312D) ein Oberflächenabschnitt ist, wo ein Abstand von einer Felgenmittelebene (S) des Reifens am größten ist, und der konkave Abschnitt (Q) auf jeder der Oberflächen der oberen Seitenwand (312U) und der unteren Seitenwand (312D) ein Oberflächenabschnitt ist, wo der Abstand von der Felgenmittelebene (S) des Reifens am kleinsten ist, und
wobei der konvexe Abschnitt (P) und der konkave Abschnitt (Q) auf gegenüberliegenden Seiten in Bezug auf die Drehachse der Reifenanordnung (300) angeordnet sind.

2. Anpassvorrichtung (10) für die Reifenanordnung (300) nach Anspruch 1, wobei die Anpassvorrichtung (10) ferner einen Anwendungsabschnitt aufweist, der dazu konfiguriert ist, dass er auf die Lauffläche (316) des Reifens (310) eine Kraft in einer Richtung ausübt, in der der erste Oberflächenabschnitt der Seitenwand in Richtung der Radseite verschoben wird.

3. Anpassvorrichtung (10) für die Reifenanordnung (300) nach Anspruch 2, wobei der Anwendungsabschnitt zwei oder mehr Anwendungselemente aufweist, die dazu konfiguriert sind, dass sie jeweils Kräfte auf Abschnitte in einer Laufflächenoberfläche (316) des Reifens (310) ausüben, wobei die Abschnitte in einer Umfangsrichtung des Reifens (310) voneinander beabstandet sind.

4. Anpassvorrichtung (10) für die Reifenanordnung (300) nach Anspruch 2 oder 3, wobei:
die Anpassvorrichtung (10) ferner ein Zeitsteuerungselement (410) aufweist; und
das Zeitsteuerungselement (410) konfiguriert dazu ist, dass es
bewirkt, dass die Kraft durch den Anwendungsabschnitt auf den Reifen (310) ausgeübt wird; und
in einem Zustand, in dem die Kraft durch den Anwendungsabschnitt auf den Reifen (310) ausgeübt wird, bewirkt, dass der Drückabschnitt (232U, 232D) beginnt, den ersten Oberflächenabschnitt des Reifens (310) zu drücken.

5. Anpassvorrichtung (10) für die Reifenanordnung (300) nach einem der Ansprüche 1 bis 4, wobei die Anpassvorrichtung (10) ferner aufweist:
einen Detektionselement (430), das dazu konfiguriert ist, dass es einen konkav-konvexen Zustand auf der Oberfläche der Seitenwand des Reifens (310) der Reifenanordnung (300), die von dem Stützabschnitt (100) gestützt wird, erkennt, wobei der konkav-konvexe Zustand ein Zustand der Reifenanordnung vor dem Anpassen des Wulstabschnitts des Reifens auf den Wulstsitzabschnitt des Rades ist, wo der Reifen leicht von der ursprünglichen Form derart verformt ist, dass ein konvexer Abschnitt (P) und ein konkaver Abschnitt (Q) auf jeder der Oberflächen der oberen Seitenwand (312U) und der unteren Seitenwand (312D) vorhanden sind; und
ein Einstellelement (420), das dazu konfiguriert ist, dass es auf der Grundlage eines Erkennungsergebnisses des Detektionselements (430) relative Positionen zwischen der Reifenanordnung (300) und dem Drückabschnitt (232U, 232D) so einstellt, dass der Drückabschnitt (232U, 232D) in der Lage ist, einen Oberflächenabschnitt auf der Seite eines konvexen Abschnitts (P) auf der Oberfläche der Seitenwand zu drücken.

6. Anpassvorrichtung (10) für die Reifenanordnung (300) nach Anspruch 5, wobei der Oberflächenabschnitt auf der Seite des konvexen Abschnitts (P) ein Oberflächenabschnitt ist, der sich auf der Oberfläche der Seitenwand zwischen dem konvexen Abschnitt (P) und einem Abschnitt befindet, der um 90 Grad von dem konvexen Abschnitt (P) in der Umfangsrichtung des Reifens (310) bewegt ist.

7. Verfahren zur Herstellung einer Reifenanordnung (300), umfassend:
einen Montageschritt des Bildens einer Reifenanordnung (300) durch Montieren eines Reifens (310) mit einem Wulstabschnitt (314D, 314U) auf einem Rad (320) mit einem Wulstsitzabschnitt (334D, 334U); und
nach dem Montageschritt Anpassen eines Wulstabschnitts (314D, 314U) des Reifens (310) an einem Wulstsitzabschnitt (334D, 334U) des Rades (320) unter Verwendung einer Anpassvorrichtung (10) nach einem der Ansprüche 1 bis 6, und umfassend
einen Drückschritt, bei dem während des Drückens eines ersten Oberflächenabschnitts, der sich auf einer Oberfläche von mindestens einer der Seitenwände des Reifens (310) auf einer Seite eines konvexen Abschnitts (P) befindet, wo ein Abstand von einer Felgenmittelebene (S) des Rades (320) am größten ist, ermöglicht wird, dass ein zweiter Oberflächenabschnitt in einer Richtung weg von der Felgenmittelebene (S) verschiebbar ist, wobei sich der zweite Oberflächenabschnitt auf der Oberfläche der Seitenwand auf einer Seite eines konkaven Abschnitts (Q) befindet, wo der Abstand von der Felgenmittelebene (S) am kleinsten ist,
wobei vor dem Anpassen des Wulstabschnitts des Reifens auf den Wulstsitzabschnitt des Rads die Reifenanordnung in einem konkav-konvexen Zustand ist, in dem der Reifen leicht von der ursprünglichen Form derart verformt ist, dass ein konvexer Abschnitt (P) und ein konkaver Abschnitt (Q) auf jeder der Oberflächen einer oberen Seitenwand (312U) und einer unteren Seitenwand (312D) vorhanden sind,
wobei die Felgenmittelebene (S) eine virtuelle Ebene ist, die durch die Mitte des Rades (320) in seiner Drehachsenrichtung verläuft und senkrecht zur Drehachse des Rades (320) ist,
wobei der erste Oberflächenabschnitt ein Abschnitt in einem konvexen Bereich (312H) ist, der ein halbbogenförmiger Bereich ist, in dem ein konvexer Abschnitt (P) an der ungefähren Mitte in der Umfangsrichtung in einem Paar halbbogenförmiger Bereiche angeordnet ist, die durch Teilen der ringförmigen Oberfläche der oberen Seitenwand (312U) und der unteren Seitenwand (312D) durch eine virtuelle gerade Linie (V) gebildet werden, die senkrecht zu der Drehachse der Reifenanordnung (300) ist und durch die Drehachse der Reifenanordnung (300) verläuft, und
der zweite Oberflächenabschnitt ein Abschnitt in einem konkaven Bereich (312L) ist, der ein halbbogenförmiger Bereich ist, in dem ein konkaver Abschnitt (Q) in der ungefähren Mitte in der Umfangsrichtung in einem Paar halbbogenförmiger Bereiche angeordnet ist, die durch Teilen der ringförmigen Oberfläche der oberen Seitenwand (312U) und der unteren Seitenwand (312D) durch eine virtuelle gerade Linie (V) gebildet werden, die senkrecht zu der Drehachse der Reifenanordnung (300) ist und durch die Drehachse der Reifenanordnung (300) verläuft, und
wobei der konvexe Abschnitt (P) und der konkave Abschnitt (Q) auf gegenüberliegenden Seiten in Bezug auf die Rotationsachse der Reifenanordnung (300) angeordnet sind.

## Revendications

1. Dispositif d'ajustement (10) pour un ensemble pneumatique (300) comprenant une roue (320) et un pneumatique (310) monté sur la roue (320), dans lequel le pneumatique (310) comprend une paire de flancs (312U, 312D), une paire de parties talon (314U, 314D) et une surface de bande de roulement (316), le dispositif d'ajustement (10) étant configuré pour ajuster la partie talon (314D, 314U) du pneumatique (310) à la partie siège de talon (334D, 334U) de la roue (320), le dispositif d'ajustement (10) comprenant :
une partie support (100) configurée pour supporter l'ensemble pneumatique (300) ; et
une partie de pression (232U, 232D),
dans lequel :
la partie de pression (232U, 232D) est configurée pour presser une première partie de surface dans une surface d'au moins l'un des flancs (312U, 312D) du pneumatique (310) ; et
la partie support (100) est configurée pour supporter l'ensemble pneumatique (300) de sorte qu'une seconde partie de surface située dans la surface du au moins un flanc sur un côté opposé d'un axe de rotation (O) de l'ensemble pneumatique (300) de la première partie de surface soit déplaçable dans une direction s'éloignant d'un plan central de jante (S) de la roue (320),
dans lequel le plan central de jante (S) est un plan virtuel qui passe par le centre de la roue (320) dans la direction de son axe de rotation et est perpendiculaire à l'axe de rotation de la roue (320),
dans lequel la première partie de surface est une partie dans une région convexe (312H) qui est une région en forme de demi-arc, dans laquelle une partie convexe (P) est située au niveau du centre approximatif dans la direction circonférentielle dans une paire de régions en forme de demi-arc formées en divisant la surface annulaire d'un flanc supérieur (312U) et d'un flanc inférieur (312D) par une ligne droite virtuelle (V) perpendiculaire à l'axe de rotation de l'ensemble pneumatique (300) et passant par l'axe de rotation de l'ensemble pneumatique (300),
dans lequel la seconde partie de surface est une partie dans une région concave (312L) qui est une région en forme de demi-arc, dans laquelle une partie concave (Q) est située au niveau du centre approximatif dans la direction circonférentielle dans une paire de régions en forme de demi-arc formées en divisant la surface annulaire du flanc supérieur (312U) et du flanc inférieur (312D) par une ligne droite virtuelle (V) perpendiculaire à l'axe de rotation de l'ensemble pneumatique (300) et passant par l'axe de rotation de l'ensemble pneumatique (300),
dans lequel la partie convexe (P) est, dans chacune des surfaces du flanc supérieur (312U) et du flanc inférieur (312D), une partie de surface où une distance depuis un plan central de jante (S) de la roue est la plus longue, et la partie concave (Q) est, dans chacune des surfaces du flanc supérieur (312U) et du flanc inférieur (312D), une partie de surface où la distance depuis le plan central de jante (S) de la roue est la plus courte, et
dans lequel la partie convexe (P) et la partie concave (Q) sont situées sur des côtés opposés par rapport à l'axe de rotation de l'ensemble pneumatique (300).

2. Dispositif d'ajustement (10) pour l'ensemble pneumatique (300) selon la revendication 1, comprenant en outre une partie d'application configurée pour appliquer, à la surface de bande de roulement (316) du pneumatique (310), une force dans une direction dans laquelle la première partie de surface du flanc est déplacée vers le côté roue.

3. Dispositif d'ajustement (10) pour l'ensemble pneumatique (300) selon la revendication 2, dans lequel la partie d'application inclut deux éléments d'application ou plus configurés pour appliquer respectivement des forces à des parties dans une surface de bande de roulement (316) du pneumatique (310), les parties étant espacées les unes des autres dans une direction circonférentielle du pneumatique (310).

4. Dispositif d'ajustement (10) pour l'ensemble pneumatique (300) selon la revendication 2 ou 3, dans lequel :
le dispositif d'ajustement (10) comprend en outre une partie de commande de synchronisation (410) ; et
la partie de commande de synchronisation (410) est configurée pour :
amener la force par la partie d'application à être appliquée au pneumatique (310) ; et
dans un état dans lequel la force par la partie d'application est appliquée au pneumatique (310), amener la partie de pression (232U, 232D) à commencer à presser la première partie de surface du pneumatique (310).

5. Dispositif d'ajustement (10) pour l'ensemble pneumatique (300) selon l'une quelconque des revendications 1 à 4, comprenant en outre :
une partie de détection (430) configurée pour détecter un état concave-convexe dans la surface du flanc du pneumatique (310) de l'ensemble pneumatique (300) supporté par la partie support (100), dans lequel l'état concave-convexe est un état de l'ensemble pneumatique avant l'ajustement de la partie talon du pneumatique sur la partie siège de talon de la roue, où le pneumatique est légèrement déformé par rapport à sa forme d'origine de sorte qu'une partie convexe (P) et une partie concave (Q) soient présentes dans chacune des surfaces du flanc supérieur (312U) et du flanc inférieur (312D) ; et
une partie de réglage (420) configurée pour, sur la base d'un résultat de détection de la partie de détection (430), régler des positions relatives entre l'ensemble pneumatique (300) et la partie de pression (232U, 232D) de sorte que la partie de pression (232U, 232D) soit capable de presser une partie de surface sur un côté partie convexe (P) dans la surface du flanc.

6. Dispositif d'ajustement (10) pour l'ensemble pneumatique (300) selon la revendication 5, dans lequel la partie de surface sur le côté partie convexe (P) est une partie de surface située dans la surface du flanc entre la partie convexe (P) et une partie déplacée de 90 degrés depuis la partie convexe (P) dans la direction circonférentielle du pneumatique (310).

7. Procédé de fabrication d'un ensemble pneumatique (300) comprenant :
une étape d'assemblage consistant à former un ensemble pneumatique (300) en montant un pneumatique (310) présentant une partie talon (314D, 314U) sur une roue (320) présentant une partie siège de talon (334D, 334U) ; et
après l'étape d'assemblage, l'ajustement d'une partie talon (314D, 314U) du pneumatique (310) sur une partie siège de talon (334D, 334U) de la roue (320) à l'aide d'un dispositif d'ajustement (10) selon l'une quelconque des revendications 1 à 6, et incluant
une étape de pressage consistant, tout en pressant une première partie de surface située dans une surface d'au moins l'un des flancs du pneumatique (310) sur un côté d'une partie convexe (P) où une distance depuis un plan central de jante (S) du pneumatique (320) est la plus longue, à permettre à une seconde partie de surface d'être déplaçable dans une direction s'éloignant du plan central de jante (S), la seconde partie de surface étant située dans la surface du flanc sur un côté d'une partie concave (Q) où la distance depuis le plan central de jante (S) est la plus courte,
dans lequel avant l'ajustement de la partie talon du pneumatique sur la partie siège de talon de la roue, l'ensemble pneumatique est dans un état concave-convexe, où le pneumatique est légèrement déformé par rapport à la forme d'origine de sorte qu'une partie convexe (P) et une partie concave (Q) soient présentes dans chacune des surfaces d'un flanc supérieur (312U) et d'un flanc inférieur (312D),
dans lequel le plan central de jante (S) est un plan virtuel qui passe par le centre de la roue (320) dans la direction de son axe de rotation et est perpendiculaire à l'axe de rotation de la roue (320),
dans lequel la première partie de surface est une partie dans une région convexe (312H) qui est une région en forme de demi-arc, dans laquelle une partie convexe (P) est située au niveau du centre approximatif dans la direction circonférentielle dans une paire de régions en forme de demi-arc formées en divisant la surface annulaire du flanc supérieur (312U) et du flanc inférieur (312D) par une ligne droite virtuelle (V) perpendiculaire à l'axe de rotation de l'ensemble pneumatique (300) et passant par l'axe de rotation de l'ensemble pneumatique (300), et
la seconde partie de surface est une partie dans une région concave (312L) qui est une région en forme de demi-arc, dans laquelle une partie concave (Q) est située au niveau du centre approximatif dans la direction circonférentielle dans une paire de régions en forme de demi-arc formées en divisant la surface annulaire du flanc supérieur (312U) et du flanc inférieur (312D) par une ligne droite virtuelle (V) perpendiculaire à l'axe de rotation de l'ensemble pneumatique (300) et passant par l'axe de rotation de l'ensemble pneumatique (300), et
dans lequel la partie convexe (P) et la partie concave (Q) sont situées sur des côtés opposés par rapport à l'axe de rotation de l'ensemble pneumatique (300).
